(19) **Europäisches Patentamt**

**European Patent Office**

**Office européen des brevets**

(11) **EP 0 929 119 B1**

(12) **FASCICULE DE BREVET EUROPEEN**

(45) Date de publication et mention
de la délivrance du brevet:
**13.12.2006 Bulletin 2006/50**

(51) Int Cl.:
*H01Q 3/26* (2006.01)  *H04Q 7/38* (2006.01)
*H04Q 7/36* (2006.01)

(21) Numéro de dépôt: **99400002.4**

(22) Date de dépôt: **04.01.1999**

(54) **Procédé d'émission d'un signal de contrôle par une station de base d'un système de radiocommunication numérique cellulaire et station de base correspondante**

Verfahren zum Aussenden eines Steuersignals durch eine Basisstation eines numerischen zellularen Funkkommunikationssystems und zugehörige Basisstation

Method for transmission of a control signal from a base station of a numerical cellular radio communication system and corresponding base station

(84) Etats contractants désignés:
**DE ES FI GB IT SE**

(30) Priorité: **12.01.1998 FR 9800191**

(43) Date de publication de la demande:
**14.07.1999 Bulletin 1999/28**

(73) Titulaire: **ALCATEL**
**75008 Paris (FR)**

(72) Inventeur: **Dartois, Luc**
**78955 Carrieres Sous Poissy (FR)**

(74) Mandataire: **El Manouni, Josiane et al**
**COMPAGNIE FINANCIERE ALCATEL**
**Département Propriété Industrielle**
**54, rue La Boétie**
**75008 Paris (FR)**

(56) Documents cités:
**FR-A- 2 646 563**     **GB-A- 2 281 007**
**GB-A- 2 295 524**     **GB-A- 2 317 786**
**US-A- 5 272 484**     **US-A- 5 479 177**

**Description**

Le domaine de l'invention est celui des systèmes de radiocommunication numérique cellulaire avec des stations mobiles.

Plus précisément, l'invention concerne un procédé d'émission d'un signal de contrôle par une station de base d'un système de radiocommunication numérique cellulaire, ainsi qu'une station de base correspondante.

L'invention s'applique notamment, mais non exclusivement, à l'émission des signaux BCCH dans des systèmes de radiocommunication de type GSM 900 (pour "Global System for Mobile" en anglais ou "Groupe spécial Systèmes Mobiles publics de radiocommunication fonctionnant dans la bande des 900 Mhz"), DCS 1800 (pour "Digital Cellular System 1800 Mhz" en anglais) ou encore PCS 1900 (pour "Personal Communication System" en anglais).

On rappelle que, d'une façon générale, un système de radiocommunication numérique cellulaire est mis en oeuvre au sein d'un réseau de cellules géographiques parcouru par des stations mobiles. Une station de base est associée à chaque cellule, et une station mobile communique par l'intermédiaire de la station de base associée à la cellule dans laquelle elle se trouve.

Chaque station de base utilise, sur la voie descendante (c'est-à-dire de la station de base vers les stations mobiles), un certain nombre de signaux (aussi appelés porteuses) de fréquences prédéterminées. L'un de ces signaux, appelé signal BCCH (pour "Broadcast Control CHannel" en anglais), est un signal de contrôle portant notamment (en général sur le premier intervalle de temps de chaque trame) un canal diffusé BCCH propre à la cellule et fournissant à toutes les stations mobiles des informations générales sur le réseau et des informations sur la cellule de diffusion ainsi que sur les cellules adjacentes.

Le problème posé ici est l'émission par la station de base du signal BCCH, ou plus généralement d'un signal de contrôle quelconque. Du fait que toute la cellule doit être couverte, cette émission doit respecter un certain nombre de contraintes. Tout d'abord, elle doit être isotropique (ou quasi-isotropique). Par ailleurs, elle doit être effectuée à une puissance suffisamment élevée, de manière permanente et à une fréquence fixe.

Traditionnellement, afin que ces contraintes soient respectées, le signal BCCH est émis par une antenne omnidirectionnelle coopérant avec un amplificateur de puissance.

Cependant, afin d'augmenter la taille des cellules et/ou de réduire les puissances d'émission des stations de base, il a été proposé de remplacer les antennes omnidirectionnelles par des réseaux d'antennes. De tels réseaux d'antennes permettent en effet de former dynamiquement des faisceaux et donc d'optimiser l'utilisation des ressources.

Dans un premier temps, seuls les signaux de trafic ont bénéficié d'une émission par faisceaux. En d'autres termes, chaque station de base comprenait un ou plusieurs réseaux d'antennes, pour l'émission des signaux de trafic, tout en conservant une antenne omnidirectionnelle, pour l'émission du signal BCCH. Pendant longtemps, les contraintes que l'émission du signal BCCH doit respecter ont conduit à penser que seule une antenne omnidirectionnelle pouvait convenir.

Mais dans un second temps, beaucoup plus récent, il a été proposé d'émettre le signal BCCH lui aussi avec un ou plusieurs réseau(x) d'antennes. On notera que le nombre de réseaux d'antennes est généralement directement lié au nombre de secteur(s) que comprend la cellule, la couverture de chaque secteur étant assurée par un réseau d'antennes.

Ainsi, le document de brevet WO/9617486 propose une station de base comprenant : des moyens de formation d'une pluralité de faisceaux fixes, couvrant chacun une partie de la cellule ; et des moyens d'affectation du signal BCCH successivement à chacun des faisceaux fixes. De cette façon, l'émission du signal BCCH correspond à une couverture de la cellule par balayage cyclique. Il est préconisé que le signal BCCH soit émis dans chaque faisceau pendant la durée d'un intervalle de temps de la structure de trame. Chaque faisceau reçoit alors le signal BCCH tous les N intervalles de temps, avec N le nombre total de faisceaux.

La solution proposée dans ce document de brevet n'est pas satisfaisante.

Tout d'abord, l'émission du signal BCCH, si elle est isotropique, ne peut pas en revanche être considérée comme une réelle diffusion du fait du temps de récurrence important (à savoir N intervalles de temps),entre deux émissions dans un même faisceau.

Par ailleurs, du fait de ce temps de récurrence important, il est difficile pour une station mobile d'entretenir avec précision sa connaissance des meilleures stations de base avoisinantes. En outre, entre deux pointages successifs dans sa direction, la station mobile peut s'être déplacée, ce qui augmente encore la probabilité de perte du signal BCCH et augmente la complexité des transferts intersecteurs et/ou intercellulaires ("Handovers")

Le document US 5272484 décrit un système pour introduire des retards dans une antenne réseau, comportant un système activé sélectivement pour introduire des retards variables entre l'émetteur récepteur de signal et les éléments individuels de réseau d'antenne.

La présente invention a notamment pour objectif de pallier ces différents inconvénients de l'état de la technique.

Plus précisément, l'un des objectifs de la présente invention est de fournir un procédé d'émission d'un signal de contrôle par une station de base d'un système de radiocommunication numérique cellulaire, permettant d'optimiser les ressources d'émission nécessaires.

Un objectif complémentaire de l'invention est de fournir un tel procédé permettant de réduire les coûts de fabrication et de maintenance.

Un autre objectif de l'invention est de fournir un tel procédé permettant une diffusion sensiblement isotropique du signal de contrôle.

Un autre objectif de l'invention est de fournir un tel procédé permettant de conserver tous les avantages liés à la formation de faisceaux (diminution des interférences, diminution de la puissance nécessaire et/ou de la taille de la cellule,...).

Ces différents objectifs, ainsi que d'autres qui apparaîtront par la suite, sont atteints, selon un premier mode de réalisation préférentiel de l'invention, à l'aide d'un procédé d'émission d'un signal de contrôle par une station de base d'un système de radiocommunication numérique cellulaire, ladite station de base comprenant au moins un réseau d'une pluralité d'antennes permettant de créer dynamiquement un faisceau d'émission dudit signal de contrôle, ledit faisceau d'émission pouvant prendre différentes positions angulaires comprises dans une plage angulaire prédéterminée, une pluralité de chaînes d'émission étant associées à ladite pluralité d'antennes, chaque chaîne d'émission comprenant notamment des moyens de modulation de phase et des moyens de déphasage, chaque antenne émettant un signal fourni par l'une desdites chaînes d'émission, dite associée, à partir dudit signal de contrôle et contribuant à la création dudit faisceau, caractérisé en ce que ledit procédé comprend l'étape suivante :

- affectation audit signal de contrôle, dans au moins une desdites chaînes d'émission, d'un décalage temporel spécifique prédéterminé, de façon que ledit faisceau d'émission, dit faisceau vibrant, prenne successivement au moins certaines desdites différentes positions angulaires et permette une diffusion isotropique dudit signal de contrôle dans ladite plage angulaire.

Ce premier mode de réalisation de l'invention consiste donc à former un faisceau qui vibre rapidement (c'est-à-dire qui prend différentes positions angulaires) au rythme de la modulation de phase du signal.

Il est à noter que cette vibration est lissée par le démodulateur/décodeur de canal des terminaux.

On rappelle que de façon classique, un faisceau ne vibre pas et pointe dans une direction angulaire fixe. Le décalage temporel introduit dans un ou plusieurs chaînes d'émission un déphasage supplémentaire sur le signal délivré par cette ou ces chaînes d'émission. C'est ce déphasage supplémentaire qui induit la variation recherchée de la direction du faisceau. Il convient de s'assurer que les déphasages supplémentaires sont suffisamment faibles pour éviter toute annulation, par addition, des signaux émis par les antennes et provenant des chaînes d'émission. Le fait d'éviter l'annulation du signal émis permet, en revanche, une sommation en puissance des différents signaux générés par différents décalages temporels.

Par décalage temporel, on entend aussi bien un retard qu'une avance temporelle.

En outre, ce décalage temporel peut être effectué avant, lors ou encore après la modulation de phase, mais en revanche avant toute conversion en signal analogique.

L'effet isotropique de la vibration découle de la nature aléatoire des bits de la modulation de phase. Cette diffusion isotropique est accentuée en cas de codage (cryptage et/ou chiffrement). Quant à la vitesse de vibration, elle est directement liée à la vitesse de la modulation de phase.

Il est à noter que la diffusion du signal de contrôle obtenue avec le faisceau vibrant est meilleure que celle obtenue de façon classique avec une antenne omnidirectionnelle. En effet, la vibration permet de réduire les phénomènes d'évanouissement ("fading") grâce au chevauchement des différentes positions angulaires prises par le faisceau vibrant.

L'introduction d'un décalage dans le temps présente un coût quasiment nul. Du fait que l'on travaille en numérique, il suffit en effet de sélectionner certains échantillons parmi une pluralité.

L'invention bénéficie de tous les avantages liés à la formation de faisceaux par un réseau d'antennes.

De façon avantageuse, la différence entre deux décalages temporels affectés à deux chaînes d'émission associées à deux antennes adjacentes est égale à un décalage temporel élémentaire dT, de valeur fixe prédéterminée.

Ce retard élémentaire est par exemple tel que la différence de phase entre les deux sorties des deux chaînes d'émission associées à deux antennes adjacentes soit égale à quelques dizaines de degrés lorsqu'il se présente un saut ou une rotation de phase significative, par exemple de 60° à 90° entre deux bits successifs du signal modulant (c'est-à-dire du signal de contrôle dans le cas présent).

Préférentiellement, ledit faisceau étant créé par N antennes associées à N chaînes d'émission, chacune desdites N chaînes d'émission est affectée d'un décalage temporel parmi une pluralité de N décalages temporels uniformément répartis sur un nombre n prédéterminé de périodes bit.

Une telle caractéristique permet de favoriser un décalage temporel régulier entre deux signaux consécutifs. Les différences de phase relatives à l'amplitude de la vibration induite entre deux faisceaux vibrants sont en conséquence de même largeur.

Dans un mode de réalisation préférentiel de l'invention, chaque décalage temporel prédéterminé, spécifique à l'une desdites chaînes d'émission, est une fraction prédéterminée d'une période bit.

Ainsi, les décalages étant très petits devant la période bit de la modulation de phase, par exemple en raison de l'utilisation de la modulation GMSK (ou codage généralisé au décalage minimum pour "Generalized Minimum Shift Keying" en anglais), ils garantissent un écart de phase entre ces signaux tel que l'addition de ces derniers n'est pas nulle.

Cela permet une diffusion sensiblement isotropique du signal de contrôle vue d'une station mobile située dans la plage angulaire décrite par le faisceau vibrant résultant. En outre, une telle technique réduit considérablement l'effet d'évanouissement (ou "Fading" en anglais) directif vu de cette station mobile.

Avantageusement, lesdits décalages temporels sont répartis de part et d'autre d'une référence temporelle propre à ladite station de base.

De cette façon, on ne biaise pas l'estimation de cette référence temporelle faite par les stations mobiles. Par ailleurs, cela permet de décaler la phase du faisceau vibrant de part et d'autre d'une direction angulaire moyenne fixée.

Avantageusement, ledit réseau d'antennes appartient au groupe comprenant les réseaux d'antennes coplanaires et les réseaux d'antennes non coplanaires.

Il est à noter que si le réseau est du type non coplanaire, les décalages temporels ainsi que les déphasages affectés aux chaînes d'émission sont modifiés selon la topologie et la géométrie de ce réseau d'antennes. Cela s'applique notamment à un réseau polygonal à symétrie axiale, permettant à lui seul de couvrir 360°. Dans un tel cas, aucune sectorisation de la station de base n'est donc nécessaire.

De façon préférentielle, ladite station de base est du type comprenant au moins deux réseaux d'antennes couvrant chacun un secteur angulaire distinct.

Préférentiellement, chaque réseau d'antennes étant du type coplanaire, caractérisé en ce que les antennes de chaque réseau sont équiespacées d'une distance inférieure à la demi-longueur d'onde de la fréquence maximale utilisée dans le secteur angulaire couvert par ledit réseau.

De façon avantageuse, ledit réseau d'antennes est également utilisé pour transmettre au moins un signal de trafic, selon une technique de superposition et/ou d'addition de signaux sur au moins certaine(s) chaîne(s) d'émission.

De cette façon, on optimise l'utilisation des moyens d'émission disponibles. On rappelle qu'un signal de trafic est composé, dans le cas d'un faisceau étroit, d'une combinaison en phase et en amplitude d'un même signal élémentaire émis sur chaque antenne du réseau.

Préférentiellement, ledit système de radiocommunication numérique cellulaire appartient au groupe comprenant les systèmes à Accès Multiple à Répartition Spatiale et les systèmes à filtrage spatial.

En d'autres termes, l'invention s'applique que le système permette ou non l'accès simultané de plusieurs terminaux au même canal fréquence.

En outre, qu'il soit de type AMRS (ou SDMA, pour "Space Division Multiple Access" en anglais) ou de type SFIR (pour "Spacial FilteRing" en anglais), le système peut aussi mettre en oeuvre l'une des techniques suivantes : Accès Multiple à Répartition Fréquentielle ("Frequency Division Multiple Access" en anglais), Accès Multiple à Répartition Temporelle ("Time Division Multiple Access" en anglais), Accès Multiple à Répartition par Codage ("Coding Division Multiple Access" en anglais) ou encore une combinaison de ces techniques.

Dans un mode de réalisation préférentiel de l'invention, ledit signal de contrôle est un signal BCCH propre à ladite station de base.

L'invention concerne également une station de base mettant en oeuvre le premier mode de réalisation du procédé décrit ci-dessus. Ladite station de base comprend des moyens d'affectation audit signal de contrôle, dans au moins une desdites chaînes d'émission, d'un décalage temporel spécifique prédéterminé, de façon que ledit faisceau d'émission soit un faisceau vibrant, prenant successivement au moins certaines desdites différentes positions angulaires et permettant une diffusion isotropique dudit signal de contrôle dans ladite plage angulaire.

Selon une variante correspondant à un exemple utile à la compréhension de réalisation du procédé décrit ci-dessus, ladite station de base comprend

- au moins deux ensembles d'antennes parmi ladite pluralité d'antennes du réseau ;
- au moins deux ensembles de chaînes d'émission distincts, associés chacun à un desdits ensembles d'antennes, à raison d'une chaîne d'émission par antenne ;
- des moyens d'affectation à chaque ensemble de chaînes d'émission d'un jeu de coefficients de déphasage distinct correspondant à une position angulaire particulière dudit faisceau, chaque coefficient dudit jeu définissant le déphasage effectué par les moyens de déphasage de l'une des chaînes d'émission dudit ensemble ;

de façon que chacun desdits ensembles d'antennes crée dynamiquement un faisceau d'émission dans une direction angulaire moyenne propre, les faisceaux créés par les différents ensembles d'antennes, dits faisceaux superposés, se distinguant les uns des autres par leur phase.

D'autres caractéristiques et avantages de l'invention apparaîtront à la lecture de la description suivante de modes préférentiel de l'invention, donné à titre de simple exemple indicatif et non limitatif et des dessins annexés, dans

**EP 0 929 119 B1**

lesquels :

- la figure 1 présente un organigramme simplifié d'un mode de réalisation particulier du procédé selon l'invention d'émission d'un signal de contrôle par une station de base d'un système de radiocommunication ;
- la figure 2a illustre un schéma simplifié d'un mode de réalisation particulier d'une station de base selon l'invention mettant en oeuvre le procédé de la figure 1 ;
- la figure 2b illustre un schéma simplifié d'une chaîne d'émission de type connue et mise en oeuvre dans les différents modes de réalisation d'une station de base selon invention ;
- la figure 3 présente un schéma simplifié d'un faisceau vibrant généré par la station de base de la figure 2 ;
- la figure 4 présente un organigramme simplifié d'un exemple de réalisation particulier utile à la compréhension du procédé selon l'invention d'émission d'un signal de contrôle par une station de base d'un système de radiocommunication ;
- la figure 5 illustre un schéma simplifié d'un exemple de réalisation particulier d'une station de base utile à la compréhension de l'invention mettant en oeuvre le procédé de la figure 4;
- la figure 6 présente un schéma simplifié d'un ensemble de faisceaux superposés généré par la station de base de la figure 5 ;
- la figure 7 présente un organigramme simplifié d'un deuxième exemple de réalisation particulier utile à la compréhension du procédé selon l'invention d'émission d'un signal de contrôle par une station de base d'un système de radiocommunication;
- la figure 8 illustre un schéma simplifié d'un deuxième exemple de réalisation particulier d'une station de base utile à la compréhension de l'invention mettant en oeuvre le procédé de la figure 7 ;
- la figure 9 présente un schéma simplifié d'un ensemble de faisceaux superposés et vibrants généré par la station de base de la figure 8.

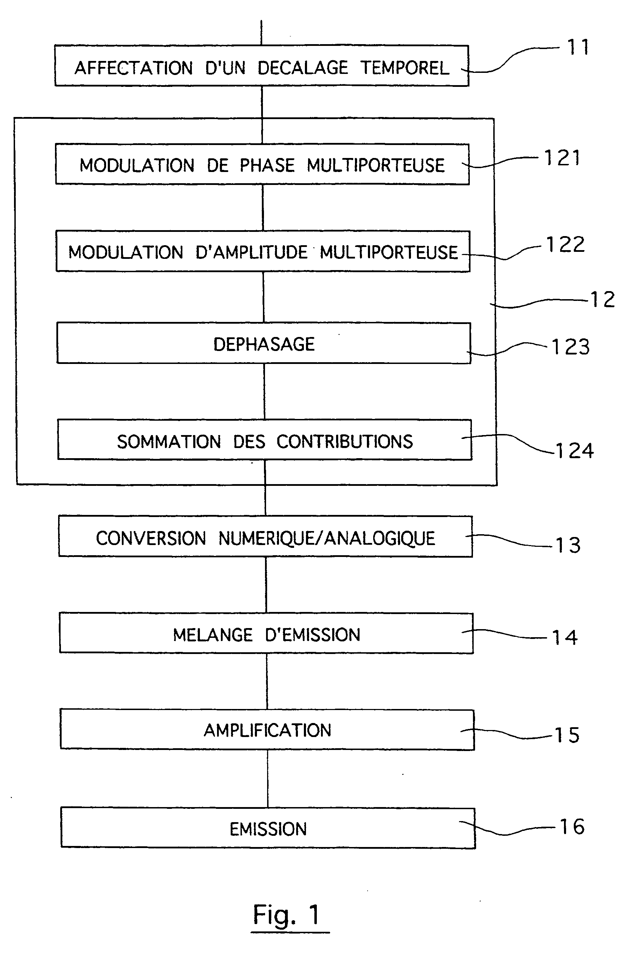

L'invention concerne donc un procédé d'émission d'un signal de contrôle par une station de base d'un système de radiocommunication numérique cellulaire et une station de base mettant en oeuvre ce procédé.
Dans la suite de la description de l'invention, le signal de contrôle est par exemple le signal BCCH de la norme GSM.
On considère ici une station de base du type comprenant au moins un réseau d'antennes capable de former un faisceau d'émission d'un signal de trafic. Ce faisceau d'émission peut occuper différentes positions angulaires comprises dans une plage angulaire prédéterminée, par exemple équivalente à 120°. Dans ce dernier cas, la cellule est décomposée en trois secteurs et la station de base associée comporte donc trois réseaux d'antennes pour couvrir la cellule.
On suppose que la station de base utilise plusieurs signaux de trafic.
De façon classique, chaque antenne du réseau d'antennes est pilotée par une chaîne d'émission associée. Chaque chaîne d'émission comprend notamment des moyens de modulation de phase, ainsi que des moyens de déphasage.
Afin d'optimiser l'utilisation des moyens déjà existants, on réutilise chaque réseau d'antennes pour créer un faisceau d'émission d'un signal de contrôle.
Le réseau d'antennes utilisé peut être un réseau d'antennes coplanaires ou non coplanaires. Dans le cas d'un réseau d'antennes coplanaires, les antennes sont équiespacées d'une distance inférieure à la demi-longueur d'onde de la fréquence maximale utilisée dans le secteur angulaire couvert par le réseau.
On présente maintenant, en relation avec la figure 1, un mode de réalisation du procédé selon l'invention d'émission d'un signal de contrôle.
Ce mode de réalisation du procédé selon l'invention repose sur l'affectation au signal de contrôle, dans au moins une des chaînes d'émission, d'un décalage temporel spécifique prédéterminé. Cela permet la création d'un faisceau dit vibrant qui prend successivement au moins certaines des différentes positions angulaires. Une telle vibration du faisceau entraîne une diffusion sensiblement isotropique du signal de contrôle dans la plage angulaire comprise entre les positions extrêmes que le faisceau peut occuper.
Dans ce mode, le procédé comprend :

- Selon le mode de réalisation de la présente invention : une étape 11 d'affectation au signal de contrôle d'un décalage temporel spécifique prédéterminé dans au moins une des chaînes d'émission du réseau d'antennes ;
- de façon classique : une étape 12 de transformation propre à chaque type de signal. Ainsi, cette étape est effectuée de manière indépendante pour les signaux de trafic et le signal de contrôle et comprend elle-même, pour chaque chaîne d'émission :

  - une étape 121 de modulation de phase multiporteuse, du signal de contrôle et des signaux de trafic ;

5

- une étape 122 de modulation d'amplitude multiporteuse, permettant la modulation d'amplitude propre aux différents signaux de trafic et du signal de contrôle ;
- une étape 123 de déphasage de chaque signal de contrôle affecté à une chaîne d'émission, de manière à ce que, par exemple dans le cas d'un réseau d'antennes coplanaires équiespacées d'une distance d, chaque chaîne i subit un déphasage $d\phi_i$, après une étape de modulation, de la forme suivante : $d\phi_i = d\phi_0*i$ , avec $d\phi_0 = (2*\pi*d*\sin(\theta))/L$, où $\theta$ correspond à la direction angulaire moyenne désirée du faisceau vibrant mesurée algébriquement par rapport à la médiatrice du plan du réseau d'antennes et L correspond à la longueur d'onde correspondant à la fréquence centrale utilisée du signal de contrôle émis ;
- une étape 124 de sommation des contributions propres sur des porteuses distinctes, d'une part, aux différents signaux de trafic et, d'autre part, au signal de contrôle ;

- une étape 13 de conversion numérique/analogique;
- une étape 14 de mélange d'émission, permettant de transposer en fréquence radio, sur chaque chaîne d'émission, les signaux de trafic et le signal de contrôle initialement en bande de base ; une même référence en fréquence étant au préalable distribuée en phase à chaque chaîne d'émission, de manière à ce que chaque chaîne d'émission soit cohérente ;
- une étape 15 d'amplification, permettant d'amplifier en puissance, sur chaque chaîne d'émission, les signaux de trafic et le signal de contrôle ;
- une étape 16 d'émission lors de laquelle chaque antenne émet avec une phase et une amplitude propres le signal de contrôle et les signaux de trafic.

Il est clair que l'étape 121 de modulation de phase multiporteuse et 122 de modulation d'amplitude multiporteuse peuvent être effectuées simultanément par exemple au moyen d'un DSP (pour "Digital Signal Processing" en anglais).

Il est à noter que les étapes 12 de transformation, 13 de conversion numérique/analogique, 14 de mélange d'émission, 15 d'amplification et 16 d'émission sont des étapes effectuées de façon classique pour créer un faisceau d'émission de signaux de trafic.

Selon une variante de l'invention, l'étape 12 de transformation peut être intervertie avec l'étape 11 d'affectation d'un décalage temporel.

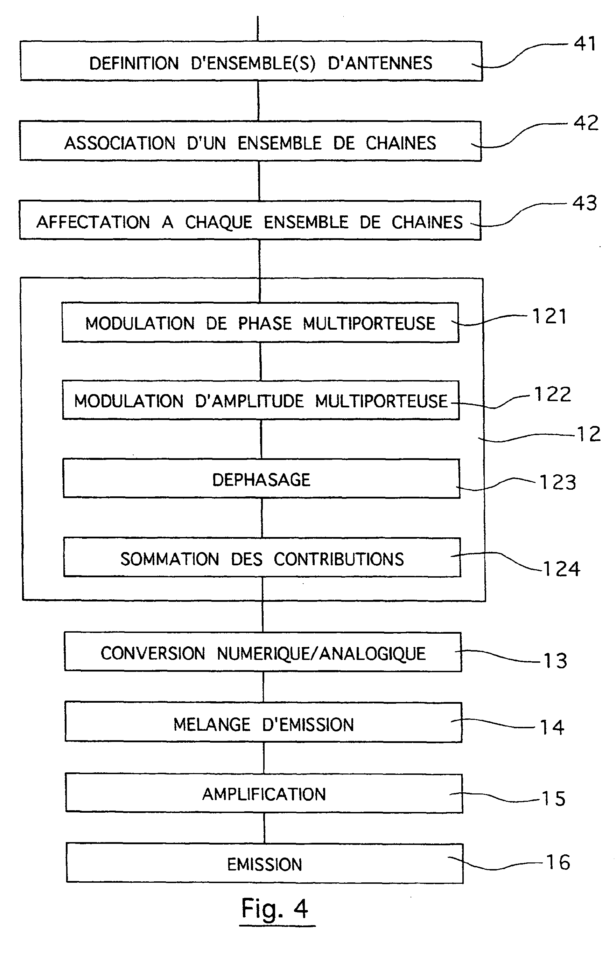

Ainsi, selon l'invention, le faisceau d'émission du signal de contrôle vibre (cf fig.3 décrite ci-dessous). En d'autres termes, ce faisceau occupe successivement, au rythme imposé par les bits de la modulation de phase, différentes positions angulaires comprises dans la plage angulaire associée au réseau d'antennes. Du fait de la nature aléatoire des bits de la modulation de phase, les différentes positions occupées le sont également de manière aléatoire. Un éventuel codage (cryptage et/ou chiffrement) opéré lors de la modulation accentue encore le caractère aléatoire des différentes positions prises. La couverture engendrée correspond à une diffusion sensiblement isotropique.

Cette diffusion est d'autant plus isotropique, vue des stations mobiles, que la vibration est rapide.

La vitesse de vibration du faisceau dépend de la vitesse de modulation. Si cette vitesse de vibration est élevée, l'égaliseur/démodulateur/décodeur de canal d'une station mobile se situant dans la zone d'émission du faisceau vibrant, lisse l'effet de vibration. En effet, il ne dispose pas du temps nécessaire pour établir une différence entre deux positions successives du faisceau vibrant.

Ainsi, la dispersion temporelle du signal composite émis par le réseau d'antennes d'une station de base se comporte, vue par les stations mobiles, comme une diversité de trajets supplémentaires qui s'ajoute à celle du canal de propagation. A ce titre, l'égaliseur/démodulateur/décodeur de la station mobile, dans la limite de la fenêtre temporelle d'égalisation, capture les différents trajets et les traite de la même façon. Une telle caractéristique peut être utilisée avantageusement pour des cellules de taille relativement petite. En effet, les stations mobiles présentent une importante marge d'égalisation car le canal est dispersé sur une durée faible par rapport au pire cas des grandes cellules rurales, pour lesquelles les stations mobiles sont dimensionnées. Une telle marge permet, en zone urbaine/suburbaine, d'améliorer la capacité du système par formation de faisceau sur les canaux de trafic.

On appelle retard élémentaire dT le retard de modulation entre deux chaînes d'émission correspondant à deux antennes adjacentes. On choisit ce retard élémentaire dT de façon qu'il permette à l'égaliseur de ne pas perdre le signal de contrôle. Pour cela, le retard élémentaire dT est par exemple tel que la différence de phase induite est de l'ordre de quelques dizaines de degrés lorsqu'il se présente un saut ou une rotation de phase, par exemple de 60° à 90°, entre deux bits successifs du signal modulant. Un décalage élémentaire dT, égal à une fraction d'une période bit est avantageux.

Par exemple pour un faisceau créé par 4 antennes associées à 4 chaînes d'émission, chacune de ces 4 chaînes d'émission peut être affectée d'un décalage temporel parmi 4 décalages temporels répartis uniformément sur deux périodes bits (soit les quatre décalages suivants : $-(3/4)*T_{bit}$ ; $-(1/4)*T_{bit}$ ; $+(1/4)*T_{bit}$ ; $+(3/4)*T_{bit}$, avec $T_{bit}$ la période bit de modulation). Le nombre de périodes bit sur lesquelles sont répartis les décalages temporels est de préférence inférieur à la capacité de l'égaliseur de la station mobile. De cette manière, l'égaliseur peut également s'occuper des canaux de trafic.

Par ailleurs, pour équilibrer les différences de phase dues à la vibration du faisceau autour de la direction angulaire moyenne désirée, les décalages temporels sont répartis de part et d'autre d'une référence temporelle propre à la station de base. Une telle répartition permet de ne pas biaiser l'estimation de cette référence temporelle effectuée par les stations mobiles. Une telle caractéristique de répartition équilibrée peut être notamment utilisée pour le traitement des changements de cellules et/ou de secteurs (ou "handovers" en anglais) d'une même cellule mettant en oeuvre le procédé d'émission du signal de contrôle selon l'invention.

Le procédé selon l'invention permet de distribuer le signal de contrôle à plusieurs antennes et donc de diminuer la puissance nécessaire. En termes d'amplification, on constate que la contribution s'en trouve diminuée de la valeur suivante : $10 \cdot \log_{10}(n)$, avec n le nombre d'antennes utilisées pour émettre le signal de contrôle. Avec n=4, le gain en puissance est ainsi de 6 dB.

Le procédé selon l'invention permet également de réduire considérablement les zones d'évanouissement (ou zones de "fading").

Il est à noter que la mise en oeuvre du procédé de l'invention ne nécessite aucune modification matérielle au niveau des stations mobiles. Du côté de la station de base, les modifications à apporter sont faibles. En effet, l'étape 11 d'affectation d'un décalage temporel au signal de contrôle modulé revient simplement à récupérer une sélection de certains échantillons de la modulation numérique utilisée.

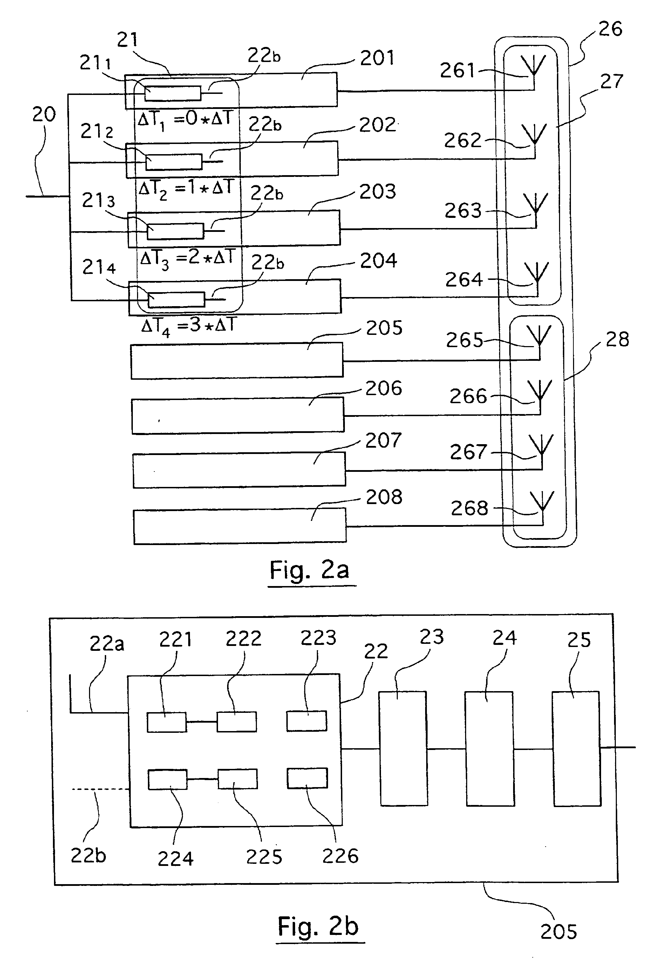

On présente maintenant, en relation avec le schéma de la figure 2a, un mode de réalisation d'une station de base selon l'invention, mettant en oeuvre le procédé de la figure 1.

Dans ce premier mode de réalisation, la station de base comprend des moyens 21 d'affectation d'un décalage temporel à un signal de contrôle 20, dans au moins une chaîne d'émission 201 à 204. Par souci de simplification, on n'a pas représenté les canaux de trafic.

Il est clair que toutes les chaînes d'émission 201 à 208 ne sont pas forcément affectées par ce décalage temporel du signal de contrôle. Les chaînes d'émission 204 à 208 non affectées peuvent être réservées au seul traitement des signaux de trafic.

Les moyens 21 d'affectation d'un décalage temporel sont alimentés par le signal de contrôle 20, et affectent à ce dernier un décalage temporel distinct pour chaque chaîne d'émission. Par exemple, les moyens $21_1$, $21_2$, $21_3$, $21_4$ d'affectation d'un décalage temporel des chaînes d'émission 201 à 204 affectent respectivement le signal de contrôle des décalages temporels suivants : $\Delta T_1$ ; $\Delta T_2$ ; $\Delta T_3$ ; $\Delta T_4$. Les moyens 21 d'affectation d'un décalage temporel au signal 20 de contrôle dans les 4 chaînes d'émission délivrent un signal 20 de contrôle décalé dans le temps d'une fraction de période bit de modulation. De cette façon, le faisceau d'émission résultant prend successivement au moins certaines des positions angulaires à une vitesse liée à celle de la modulation de phase et permet ainsi une diffusion sensiblement isotropique du signal de contrôle dans une plage angulaire prédéterminée.

De façon classique, chacune des antennes 261 à 268 émet un signal fourni par la chaîne d'émission associée et contribue à la création du faisceau d'émission des signaux de trafic. Selon l'invention, au moins certaines 27 des antennes émettent en outre le signal de contrôle. Il est clair que les antennes 261 à 268 peuvent aussi être utilisées uniquement pour l'émission du signal de contrôle. Il est clair également que le réseau d'antennes peut aussi être utilisé pour créer des faisceaux de réception des signaux émis par les stations mobiles. Les antennes 27 émettent le signal de contrôle, décalé temporellement de façon différente selon la chaîne d'émission 201 à 204 empruntée, de façon à créer un faisceau vibrant tel qu'illustré sur la figure 3.

On présente maintenant, en relation avec la figure 2b, une chaîne d'émission 205 d'émission de type connue et mise en oeuvre dans les différents modes de réalisation d'une station de base selon l'invention.

De façon classique, une station de base comporte, pour chaque chaîne d'émission, des moyens 22 de transformation, des moyens 23 de conversion numérique/analogique, des moyens 24 de mélange d'émission, des moyens 25 d'amplification et des antennes 26, utilisés pour traiter les signaux de trafic. Les moyens 22 de transformation comprennent de façon classique, des moyens 221 d'affectation d'un jeu de coefficients de déphasage, des moyens 222 de déphasage, des moyens 223 de modulation multiporteuse de phase, des moyens 224 d'affectation d'un jeu de coefficients d'amplitude, des moyens 225 de modulation multiporteuse d'amplitude et des moyens 226 de sommation des contributions des différents signaux.

Les moyens 22 de transformation des chaînes d'émission 205 à 208 (cf figure 2a) sont alimentés à haut débit uniquement par les différents signaux 22a de trafic destinés à transporter différentes données propres aux différentes communications qui ont cours avec différentes stations mobiles dans la cellule associée à la station de base. Ces moyens 22 de transformation des chaînes d'émission 205 à 208 permettent de moduler en phase et en amplitude les signaux 22a de trafic et/ou de les déphaser et/ou de sommer la contribution des différents signaux 22a de trafic. Pour cela, les moyens 222 de déphasage déphasent les signaux de trafic 22a à l'aide des coefficients de déphasage fournis par les moyens 221 d'affectation d'un jeu de coefficients de déphasage. Ces moyens 222 permettent notamment d'effectuer un déphasage relatif $d\phi_i$ entre les différentes chaînes d'émission 201 à 208, tenant compte de la topologie du réseau d'antennes mis en oeuvre. De cette façon, les moyens 222 de déphasage permettent de pallier aux différences dues notamment à la distance séparant les différentes antennes d'un réseau d'antennes coplanaires.

De même, les moyens 225 de modulation multiporteuse d'amplitude modulent en amplitude les signaux de trafic, pour les différentes chaînes d'émission 201 à 208, à l'aide des coefficients d'amplitude fournis par les moyens 224 d'affectation d'un jeu de coefficients d'amplitude.

En outre, les moyens 226 de sommation des contributions des différents signaux effectuent l'addition des différentes contributions des différents signaux 22a de trafic.

Les moyens 22 de transformation des chaînes d'émission 201 à 204 (cf figure 2a) sont en outre alimentés, selon l'invention, par le signal de contrôle $22_b$ (en pointillé sur la figure 2b) décalé dans le temps.

Les moyens 221 d'affectation d'un jeu de coefficients de déphasage, 222 de déphasage, 223 de modulation multiporteuse de phase, 224 d'affectation d'un jeu de coefficients d'amplitude, 225 de modulation multiporteuse d'amplitude et 226 de sommation des contributions des différents signaux peuvent également, selon l'invention, traiter selon la technique décrite précédemment le signal de contrôle 22b décalé dans le temps pour les chaînes d'émission 201 à 204. De cette manière, les moyens 22 de transformation des chaînes d'émission 201 à 204 délivrent un signal décalé dans le temps et transformé aux moyens 23 de conversion numérique/analogique.

Ces moyens 23 de conversion numérique/analogique sont alimentés des chaînes d'émission 201 à 208 par des données numériques concernant les signaux de trafic transformés. Les moyens 23 de conversion numérique/ analogique des chaînes d'émission 201 à 204 sont en outre alimentés par le signal de contrôle décalé dans le temps et transformé (par les moyens 22 de transformation). Les moyens 23 de conversion numérique/analogique transforment les données numériques reçues en des données analogiques. Ces moyens 23 délivrent, sous forme analogique aux moyens 24 de mélange d'émission, pour les chaînes d'émission 201 à 208 les signaux de trafic 22a, et en outre pour les chaînes d'émission 201 à 204 le signal de contrôle décalé dans le temps et transformé.

Les moyens 24 de mélange d'émission pour les chaînes d'émission 201 à 208 sont alimentés sous forme analogique par les signaux de trafic transformés, et en outre pour les chaînes d'émission 201 à 204, par le signal de contrôle décalé dans le temps et transformé. A ce stade, de tels signaux pour les chaînes d'émission 201 à 208 sont en bande de base. Les moyens 24 de mélange d'émission permettent ainsi de ramener les signaux initialement en bande de base, en fréquence intermédiaire ou fréquence radio. Les moyens 24 de mélange d'émission délivrent aux moyens 25 d'amplification, pour les chaînes d'émission 201 à 208 les signaux de trafic, et en outre pour les chaînes d'émission 201 à 204 le signal de contrôle décalé dans le temps et transformé, tous portés à la fréquence radio.

Les moyens 25 d'amplification amplifient pour les chaînes d'émission 201 à 208 les signaux de trafic, et en outre pour les chaînes d'émission 201 à 204 le signal de contrôle décalé dans le temps et transformé. Il est à noter que la puissance du signal de contrôle doit être telle que le faisceau généré via les chaînes d'émission 201 à 204 parvienne aux limites de la cellule. Les signaux amplifiés par les moyens 25 d'amplification alimentent les antennes 26 (cf figure 2a).

On présente maintenant, en relation avec la figure 3, un tel faisceau vibrant généré par la station de base de la figure 2, mettant en oeuvre le procédé de la figure 1.

De façon classique, un réseau 30 d'antennes crée un premier faisceau 34 d'émission d'un signal de trafic. Pour chaque canal de ce signal de trafic, ce premier faisceau 34 prend une position fixe dans une plage angulaire 32 délimitée par des positions extrêmes 35 et 36.

Selon l'invention, ce réseau 30 d'antennes crée en outre un second faisceau 33 pour l'émission du signal BCCH. Ce second faisceau 33 occupe successivement plusieurs positions entre les positions extrêmes 35 et 36. Par souci de simplification, outre la position 33, seule une autre position 31 a été représentée (en pointillés) sur la figure 3. Il est clair qu'en réalité, il existe de nombreuses positions prises par le second faisceau vibrant 33. Les positions occupées par le faisceau 33 sont prises, d'une part de manière aléatoire, car la nature des bits de la modulation est également aléatoire, et d'autre part, au rythme de la vitesse de la modulation de phase. En outre, le codage (cryptage et/ou chiffrement) accentue la nature aléatoire des positions occupées. Cela confère une nature isotropique à la couverture du faisceau 33 correspondant. Le faisceau peut par exemple varier de +/- 60° sur deux périodes bits, de façon à couvrir un secteur total de 120°.

La puissance d'émission du signal de contrôle est telle que le second faisceau 33 présente une longueur correspondant au rayon de la cellule, afin que la vibration conduise à une couverture complète d'un secteur de la cellule. Il est à noter que la puissance étant distribuée sur plusieurs antennes, la puissance nécessaire par antenne est considérablement réduite. En conséquence, le coût relatif à l'émission de puissance est également réduit.

On présente maintenant, en relation avec les figures 4 à 6, un exemple de réalisation utile à la compréhension du procédé et de la station de base selon l'invention d'émission d'un signal de contrôle.

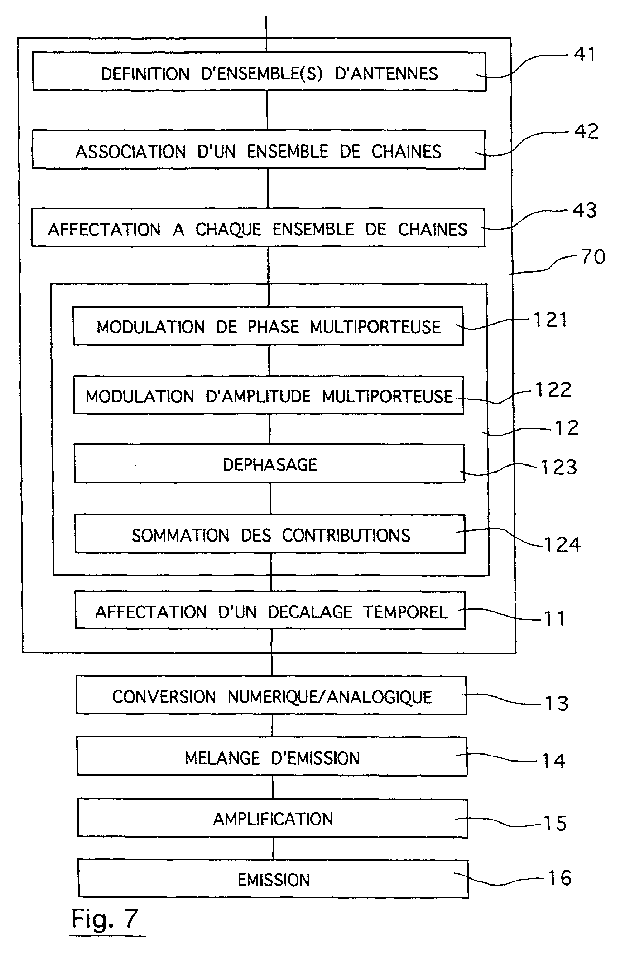

Cet exemple de procédé consiste à former (cf fig.6) une pluralité de faisceaux indépendants $61_1$ à $61_8$, chacun ayant une puissance nominale sensiblement égale à celle d'une porteuse de trafic. En d'autres termes, chaque antenne transmet une combinaison d'une pluralité de porteuses du signal de contrôle, chacune à la même fréquence mais avec une phase différente en tant que contributions indépendantes à différents faisceaux.

Comme présenté sur l'organigramme de la figure 4, quelques étapes sont communes aux premier et second modes de réalisation, à savoir les étapes 12 de transformation, 13 de conversion numérique/analogique, 14 de mélange d'émission d'amplification et 16 d'émission. L'exemple de réalisation se distingue du premier mode de réalisation en ce qu'il comprend les étapes suivantes :

- définition (41) d'au moins deux ensembles d'antennes parmi la pluralité d'antennes du réseau. Chaque ensemble d'antennes ainsi défini est destiné à former un faisceau propre au signal de contrôle ;
- association (42) d'un ensemble de chaînes d'émission distinct à chaque ensemble d'antennes, à raison d'une chaîne d'émission par antenne ;
- affectation (43) à chaque ensemble i de chaînes d'émission d'un jeu de coefficients de déphasage $\phi_{k,i}$ distinct, correspondant à une position angulaire particulière du faisceau. Chaque coefficient du jeu définit le déphasage $\phi_{k,i}$ effectué par des moyens 222 de déphasage de l'une des chaînes k d'émission de l'ensemble i de chaînes d'émission.

De cette manière, chacun des ensembles d'antennes crée dynamiquement un faisceau d'émission dans une direction angulaire moyenne propre. Les faisceaux créés par les différents ensembles d'antennes, dits faisceaux superposés, se distinguent les uns des autres par leur phase. De même, on peut affecter chaque ensemble i de chaînes d'émission d'un jeu de coefficients d'amplitude $\rho_{k,i}$ distinct, correspondant à une amplitude particulière du faisceau associé. Chaque coefficient du jeu définit l'amplitude $\rho_{k,i}$ effectué par les moyens 222 (cf figure 2b) de déphasage. Pour couvrir un secteur donné, il est ainsi possible de superposer autant de faisceaux que nécessaires, chacun ayant une largeur et une amplitude choisies.

En outre, le procédé comprend une étape 12 de transformation propre à chaque type de signal (trafic ou contrôle) et comprenant elle-même les étapes classiques 121 à 124 explicitées pour le premier mode de réalisation. Cependant, selon cet exemple, on joue sur les jeux de coefficients de déphasage $\varphi_{k,i}$ et d'amplitude $\rho_{k,i}$.

Il est clair que les étapes 441 de modulation de phase et 442 d'amplitude peuvent être effectuées par exemple de façon simultanée par traitement du signal dans un DSP (pour "Digital Signal Processing" en anglais).

Il est clair que la puissance affectée à chaque antenne d'un ensemble d'antennes est directement proportionnel au nombre d'antennes.

Par ailleurs, lorsque chaque faisceau met en oeuvre un nombre N (N=8 dans notre cas) de chaînes adjacentes, les P (P=2 dans notre cas) faisceaux peuvent utiliser une partie ou l'ensemble des antennes du réseau d'antennes. Cependant, une minimisation du nombre d'antennes contribuant à l'émission de signaux appartenant à des faisceaux différents permet de réduire la variation de puissance entre les différentes antennes, ainsi que les contraintes de dimensionnement des moyens d'amplification utilisés dans les chaînes d'émission. Cela induit l'utilisation d'un maximum d'antennes du réseau d'antennes, et contribue, en conséquence, au caractère homogène d'utilisation des moyens d'amplification et des antennes du réseau utilisés.

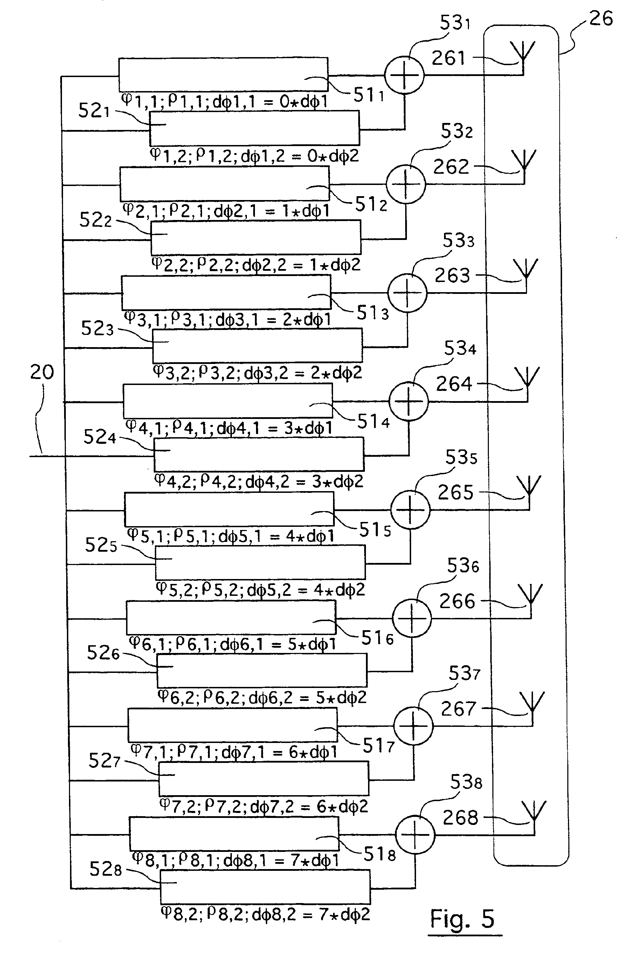

On présente maintenant, en relation avec la figure 5, un exemple d'une station de base, mettant en oeuvre le procédé de la figure 4.

Une telle station de base comprend, de façon classique, des chaînes d'émission $51_1$ à $51_8$ et $52_1$ à $52_8$ formant, dans notre cas, deux ensembles distincts de chaînes d'émission. Chacune de ces chaînes d'émission $51_1$ à $51_8$ et $52_1$ à $52_8$ comprend, de façon classique, les mêmes moyens que ceux de la chaîne d'émission 205 décrite pour la figure 2b. Chacun de ces ensembles de chaînes d'émission permet la formation d'un faisceau. Pour simplifier la figure, on ne fait apparaître que deux ensembles de chaînes d'émission.

Selon ce second exemple, la station de base comprend au moins un ensemble 26 d'antennes, au moins deux ensembles $51_1$ à $51_8$ et $52_1$ à $52_8$ de chaînes d'émission distincts, associés chacun à un des ensembles 26 d'antennes (à raison d'une chaîne d'émission par antenne). Les moyens 221 (cf figure 2b) d'affectation affectent chaque ensemble $51_1$ à $51_8$ et $52_1$ à $52_8$ de chaînes d'émission d'un jeu de coefficients de déphasage $\varphi_{k,i}$, avec k le numéro de la chaîne d'émission dans l'ensemble i de chaînes d'émission $1 \le k \le N$ et $1 \le i \le P$, distinct correspondant à une position angulaire particulière du faisceau. Chaque coefficient du jeu définissant le déphasage effectué par les moyens 222 de déphasage de l'une $51_1$ à $51_8$ ou $52_1$ à $52_8$ des chaînes d'émission de l'ensemble.

De cette façon, chacun des ensembles 26 d'antennes crée dynamiquement un faisceau d'émission dans une direction angulaire moyenne propre (cf figure 6 décrite ci-dessous). Les faisceaux créés par les différents ensembles d'antennes, dits faisceaux superposés, se distinguent les uns des autres par leur phase.

Les moyens 221 (cf figure 2b) d'affectation d'un déphasage délivrent un jeu de coefficients de déphasage $\varphi_{k,i}$ aux moyens 222 de déphasage de chaque chaîne $51_1$ à $51_8$ et $52_1$ à $52_8$ d'émission, qui déphasent en fonction de ce jeu de coefficients le signal de contrôle 20. Ce jeu de coefficients de déphasage $\varphi_{k,i}$ permet de fixer le déphasage à effectuer par les moyens 222 de déphasage. Ces moyens 222 délivrent le signal de contrôle déphasé à des moyens 225 de modulation multiporteuse d'amplitude.

De même, on prévoit des moyens 224 d'affectation à chaque ensemble $51_1$ à $51_8$ et $52_1$ à $52_8$ de chaînes d'émission d'un jeu de coefficients d'amplitude $\rho_{k,i}$, avec k le numéro de la chaîne d'émission dans l'ensemble i de chaînes d'émission $1 \le k \le N$ et $1 \le i \le P$, distinct, correspondant à une forme particulière du faisceau. Les moyens 224 d'affectation délivrent le jeu de coefficients d'amplitude $\rho_{k,i}$ par exemple aux moyens 225 de modulation multiporteuse d'amplitude. Ces moyens 225 modulent en amplitude le signal de contrôle déphasé. Les différences d'amplitude entre les coefficients d'amplitude $\rho_{k,i}$ affectés à chaque chaîne $51_1$ à $51_8$ et $52_1$ à $52_8$ d'émission permettent de contrôler la forme des faisceaux correspondants. Cela permet d'obtenir des relations de puissance différentes entre la porteuse du signal de contrôle et les porteuses des signaux de trafic sur chaque chaîne. Dans notre exemple, le rapport d'une valeur de 8 est globalement conservé entre la puissance de la porteuse du signal de contrôle et celle de n'importe lequel des signaux de trafic, pour les 8 chaînes des deux ensembles de chaînes d'émission $51_1$ à $51_8$ et $52_1$ à $52_8$ d'émission prises ensemble.

Par ailleurs, les moyens 222 de déphasage affectent chaque chaîne d'émission d'un déphasage relatif $d\phi_{k,i}$, avec k le numéro de la chaîne d'émission dans l'ensemble i de chaînes d'émission $1 \le k \le N$ et $1 \le i \le P$ pour former un faisceau tenant compte de la topologie du réseau d'antennes utilisé.

Chaque chaîne $51_1$ à $51_8$ et $52_1$ à $52_8$ d'émission permet d'émettre le signal de contrôle sur une porteuse avec une amplitude $\rho_{k,i}$, un déphasage $\varphi_{k,i}$ et un déphasage relatif $d\phi_{k,i}$ contrôlés. Ces jeux de coefficients de déphasage $\varphi_{k,i}$ et d'amplitude $\rho_{k,i}$ sont fixés et appliqués à chaque modulation sur la porteuse du signal de contrôle. Ces jeux correspondent notamment à un filtre de type spatial FIR paramétré par des coefficients complexes. Des moyens $53_1$ à $53_8$ de sommation permettent de sommer les signaux provenant d'au moins deux chaînes d'émission appartenant à deux ensembles de chaînes d'émission différents. En effet, il est avantageux qu'une même antenne située en aval de chacun de ces moyens $53_1$ à $53_8$ de sommation contribue à l'émission de faisceaux différents.

Les moyens 22 (cf figure 2b) de transformation affectent le signal de contrôle sur chaque chaîne k de l'ensemble i de chaînes d'émission d'un coefficient d'amplitude $\rho_{k,i}$, d'un coefficient de déphasage $\varphi_{k,j}$ et d'un déphasage relatif $d\phi_{k,i}$, avec $1 \le k \le (N=)8$ le numéro de chaîne dans l'ensemble de chaînes d'émission et $1 \le i \le (P=)2$ le numéro d'ensemble de chaînes d'émission.

On notera en résumé que l'exemple ne nécessite aucun moyen nouveau. Seuls les jeux de coefficients de déphasage $\varphi_{k,i}$ sont modifiés par rapport à la création d'un faisceau de trafic. Cependant, il est clair que l'on peut également agir sur les jeux de coefficients d'amplitude et déphasage relatif.

Les moyens 225 (cf figure 2b) de modulation multiporteuse d'amplitude délivrent le signal de contrôle déphasé et modulé en amplitude à des moyens 23 de conversion numérique/analogique. Ces moyens 23, ainsi que les moyens 24 de mélange d'émission, 25 d'amplification et les antennes 26 ont déjà été décrits pour le premier mode de réalisation (cf figure 2b).

On présente maintenant, en relation avec la figure 6, des faisceaux superposés créés par la station de base de la figure 5.

Le réseau 60 à 8 antennes, d'après l'exemple précédent, crée en même temps huit faisceaux $61_1$ à $61_8$ superposés dans la plage angulaire 62 (c'est-à-dire entre les positions extrémales 65 et 66).

Chaque faisceau possède une direction moyenne qui lui est propre, ainsi qu'une puissance égale à la puissance nominale affectée d'une porteuse de trafic quelconque.

De cette manière, la couverture totale, correspondant à la somme des couvertures des faisceaux superposés moins les superficies communes aux faisceaux superposés, équivaut à la superficie de couverture de la plage angulaire. En d'autres termes, le signal de contrôle est diffusé par les faisceaux superposés, de façon sensiblement isotropique.

On présente maintenant en relation avec l'organigramme de la figure 7, un second exemple utile à la compréhension du procédé selon l'invention.

De même que le premier mode de réalisation, le deuxième exemple comprend les étapes 13 de conversion numérique/analogique, 14 de mélange d'émission, 15 d'amplification et 16 d'émission. En outre, il comprend une étape 70 de traitement comprenant elle-même :

- les étapes 41 de définition d'ensembles d'antennes, 42 d'association d'un ensemble de chaînes d'émission à chaque ensemble d'antennes, 43 d'affectation à chaque ensemble de chaînes d'émission d'un jeu de coefficients de déphasage et 12 de transformation propre à chaque type de signal (cf second mode de réalisation);
- l'étape 11 d'affectation au signal de contrôle, effectué ici pour au moins l'un des ensembles de chaînes d'émission, d'un décalage temporel (cf premier mode de réalisation).

L'étape 11 permet pour au moins l'un des ensembles de chaînes d'émission, d'affecter au signal de contrôle un décalage temporel spécifique prédéterminé dans au moins une ou plusieurs des chaînes d'émission de l'ensemble. De cette manière, un ou plusieurs des faisceaux superposés sont en outre vibrants chacun autour d'une direction angulaire propre. Cette direction angulaire propre correspond à la direction moyenne par rapport aux différentes positions angulaires prises successivement par le faisceau vibrant.

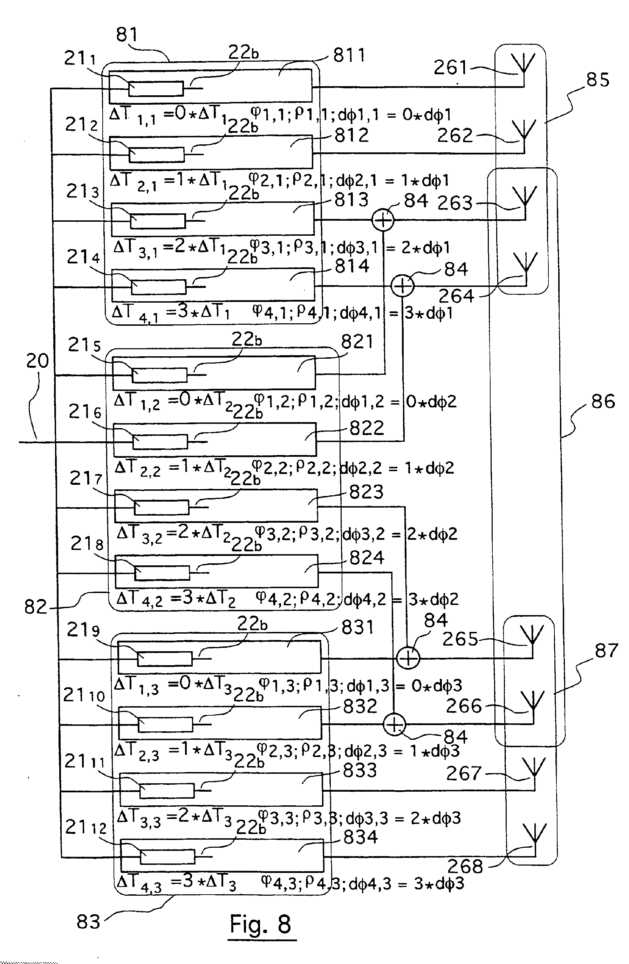

On présente maintenant, en relation avec la figure 8, un deuxième exemple utile à compréhension de la station de base selon l'invention, mettant en oeuvre le procédé de la figure 7.

La station de base comprend des moyens 81, 82 et 83 de traitement, chacun de ces moyens étant affecté à un faisceau. Chacun de ces moyens 81, 82, 83 de traitement comporte des moyens 21 d'affectation de décalage temporel et des moyens 22 de transformation. Ces moyens 22 de transformation ont été déjà décrits en détail pour le second mode de réalisation de l'invention.

Le réseau d'antennes 261 à 268 est supposé ici coplanaire. Chaque chaîne k d'un même ensemble i de chaînes d'émission subit donc un déphasage : $d\Phi_{k,i} = (k-1) * d\Phi_i$, avec $d\Phi_i = (2*\pi*\sin(\theta))/L$, $\theta$ étant la direction angulaire moyenne désirée pour le faisceau vibrant, mesurée algébriquement par rapport à la médiatrice du plan du réseau d'antennes et L représentant la longueur d'onde correspondant à la fréquence centrale utilisée pour le signal émis. Dans l'exemple présenté, trois faisceaux vibrants et superposés sont générés.

Les moyens 21 d'affectation de décalage temporel sont alimentés par le signal de contrôle 20, et délivrent ce signal 22b affecté d'un décalage temporel $\Delta T_{k,i}$ sur chaque chaîne k d'émission associée à un ensemble i de chaînes d'émission. Dans l'exemple présenté, entre chaque chaîne d'émission d'un même ensemble i de chaînes d'émission, il existe un décalage temporel élémentaire $\Delta T_i$ tel que $\Delta T_{k,i} = ((k-1) * \Delta T_i)$.

De cette façon, un premier ensemble 85 de 4 antennes 261 à 264 est associé à un premier ensemble 81 de 4 chaînes d'émission 811 à 814, affectant le signal de contrôle d'un décalage temporel égal respectivement à $0 *\Delta T_1$, $1 *\Delta T_1$, $2 *\Delta T_1$, $3 *\Delta T_1$. Un second ensemble 86 de 4 antennes 263 à 266 est associé à un second ensemble 82 de 4 chaînes d'émission 821 à 824, affectant le signal de contrôle d'un décalage temporel égal respectivement à $0 *\Delta T_2$, $1 *\Delta T_2$, $2 *\Delta T_2$, $3 *\Delta T_2$. Enfin, un troisième ensemble 87 de 4 antennes 265 à 268 est associé à un troisième ensemble 83 de 4 chaînes d'émission 831 à 834, affectant le signal de contrôle d'un décalage temporel égal respectivement à $0 *\Delta T_3$, $1 *\Delta T_3$, $2 *\Delta T_3$, $3 *\Delta T_3$.

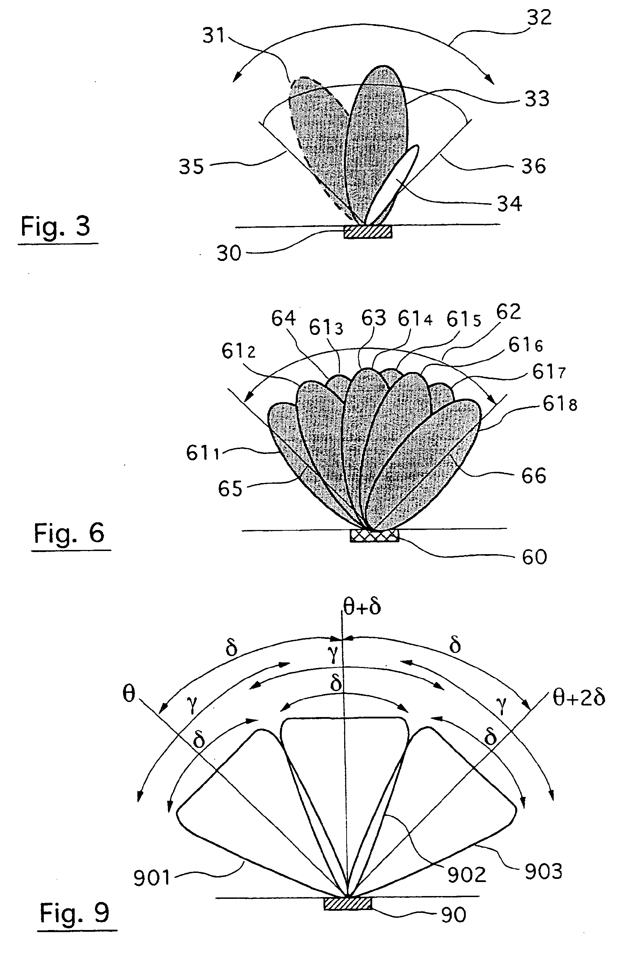

Chacun de ces trois ensembles de chaînes d'émission est associé à un faisceau vibrant distinct (cf figure 9 décrite ci-dessous).

On notera qu'une même antenne peut appartenir à plusieurs ensembles d'antennes et donc contribuer à l'émission de faisceaux différents. Par exemple, l'antenne 263 appartient aux premier et second ensembles d'antennes et reçoit les signaux des chaînes d'émission 813 et 821. Ainsi, le signal de contrôle émis S(t) peut s'écrire de la forme suivante :

$$S(t) = modul(BCCH(t - 2*\Delta T_1)) * \rho_{3,1} * e^{j\ \varphi_{3,1}} + modul(BCCH(t - 0*\Delta T_2) * \rho_{1,2} * e^{j\ \varphi_{1,2}}.$$

Les moyens 21 d'affectation de décalage temporel délivrent aux moyens 22 de transformation le signal de contrôle décalé temporellement, par exemple d'une valeur $\Delta T_{k,i} = ((k-1)*\Delta T_i)$, avec k le numéro de la chaîne d'émission dans l'ensemble i de chaînes d'émission.

Les moyens 22 (cf figure 2b) de transformation affectent le signal de contrôle sur chaque chaîne k de l'ensemble i de chaînes d'émission d'un coefficient d'amplitude $\rho_{k,i}$, d'un coefficient de déphasage $\varphi_{k,i}$ et d'un déphasage relatif $d\phi_{k,i}$, avec $1 \le k \le (N=)3$ le numéro de chaîne dans l'ensemble de chaînes d'émission et $1 \le i \le (P=)4$ le numéro d'ensemble de chaînes d'émission. Une telle affectation de ces différents jeux a été décrite plus en détail pour le deuxième mode de réalisation (cf figure 5).

Dans cet exemple, on additionne (via des moyens 84) en amont de la troisième antenne, les signaux de la troisième chaîne d'émission du premier ensemble de chaînes d'émission avec les signaux de la première chaîne d'émission du deuxième ensemble de chaînes d'émission.

De façon classique, une station de base comporte, pour chaque chaîne d'émission, des moyens 22 de transformation, des moyens 23 de conversion numérique/analogique, des moyens 24 de mélange d'émission, des moyens 25 d'amplification et des antennes 26. Ces différents moyens ont déjà été décrits pour le premier mode de réalisation (cf figure 2b).

De cette manière, on obtient, pour l'exemple présenté, trois faisceaux superposés vibrants. Le premier faisceau vibrant est associé au premier ensemble 81 de 4 chaînes 811 à 814 d'émission, qui est affecté aux 4 antennes 261 à 264 du premier ensemble 85 d'antennes. Le deuxième faisceau superposé vibrant est associé au deuxième ensemble 82 de 4 chaînes 821 à 824 d'émission, qui est affecté aux 4 antennes 263 à 266 du deuxième ensemble 86 d'antennes. Enfin, le troisième faisceau superposé vibrant est associé au troisième ensemble 83 de 4 chaînes 831 à 834 d'émission, qui est affecté aux 4 antennes 265 à 268 du troisième ensemble 87 d'antennes. Ces trois faisceaux utilisent donc trois ensembles 81 à 83 de 4 chaînes d'émission (811 à 814, 821 à 824, 831 à 834) et trois ensembles 85 à 87 de 4 antennes (261 à 264, 263 à 266, 265 à 268). Ils sont émis à la même fréquence, selon des déphasages différents. Cela se traduit par des directions angulaires moyennes pointées par ces trois faisceaux différentes, et de largeur telles que les faisceaux superposés occupent toute la plage angulaire associée au réseau d'antennes. De cette façon, la diffusion du signal de contrôle est isotropique.

On présente maintenant, en relation avec la figure 9, un schéma simplifié de trois faisceaux superposés et vibrants, générés par la station de base de la figure 8.

Un premier faisceau 901 pointe par exemple dans une direction angulaire $\theta$, présente une largeur $\delta$ et vibre selon une amplitude angulaire $\gamma$. Un deuxième faisceau 902 pointe par exemple une direction angulaire moyenne ($\theta$ +

δ), présente une largeur δ et vibre selon une amplitude angulaire γ. Un troisième faisceau 903 pointe par exemple une direction angulaire moyenne (θ + 2*δ), présente une largeur δ et vibre selon une amplitude angulaire γ.

Dans cet exemple, ces trois faisceaux présentent donc une largeur δ identique.

L'amplitude angulaire de la vibration γ est identique pour chaque faisceau. En effet, les décalages temporels élémentaires $\Delta T_i$ sont supposés égaux ($\Delta T_1 = \Delta T_2 = \Delta T_3 = \Delta T_i$) et correspondent à un petit décalage temporel représentant une partie fractionnaire de la période bit de la modulation de phase.

Le jeu de coefficients de déphasage {$\varphi_{1,1}$ à $\varphi_{4,1}$} correspondant au premier faisceau est tel que la direction angulaire θ est pointée par le premier faisceau. Le jeu de coefficients de déphasage {$\varphi_{1,2}$ à $\varphi_{4,2}$} correspondant au second faisceau est tel que la direction moyenne (θ + δ) est pointée par le second faisceau. Enfin, le jeu de coefficients de déphasage {$\varphi_{1,3}$ à $\varphi_{4,3}$} correspondant au troisième faisceau est tel que la direction moyenne (θ + 2*δ) est pointée par le troisième faisceau.

En outre, les 3 jeux de coefficients d'amplitude {$\rho_{1,1}$, à $\rho_{4,1}$},{$\rho_{1,2}$, à $\rho_{4,2}$}, {$\rho_{1,3}$, à $\rho_{4,3}$} sont tels que l'amplitude des faisceaux correspondants est égale au rayon de la cellule. Ainsi, les trois faisceaux 901 à 903 couvrent l'ensemble du secteur (soit 120° au total).

## Revendications

1. Procédé d'émission d'un signal de contrôle par une station de base d'un système de radiocommunication numérique cellulaire, ladite station de base comprenant au moins un réseau d'une pluralité d'antennes (261 à 268) permettant de créer dynamiquement un faisceau (31) d'émission dudit signal de contrôle, ledit faisceau (31) d'émission pouvant prendre différentes positions angulaires (33) comprises dans une plage (32) angulaire prédéterminée, une pluralité de chaînes (201 à 208) d'émission étant associées à ladite pluralité d'antennes (261 à 268), chaque chaîne (201 à 208) d'émission comprenant notamment des moyens (221) de modulation de phase et des moyens (222) de déphasage, chaque antenne (261 à 268) émettant un signal fourni par l'une desdites chaînes (201 à 208) d'émission, dite associée, à partir dudit signal de contrôle et contribuant à la création dudit faisceau (31), **caractérisé en ce que** ledit procédé comprend l'étape suivante :

   - affectation (11) audit signal de contrôle, dans au moins une desdites chaînes d'émission, d'un décalage temporel spécifique prédéterminé, de façon que ledit faisceau (31) d'émission soit un faisceau (31) vibrant, prenant successivement au moins certaines (33) desdites différentes positions angulaires et permettant une diffusion isotropique dudit signal de contrôle dans ladite plage (32) angulaire.

2. Procédé selon la revendication 1, **caractérisé en ce que** la différence entre deux décalages temporels affectés à deux chaînes d'émission associées à deux antennes (26) adjacentes est égale à un décalage temporel élémentaire dT, de valeur fixe prédéterminée.

3. Procédé selon l'une quelconque des revendications 1 et 2, ledit faisceau (31) étant créé par N antennes (261 à 264) associées à N chaînes (201 à 204) d'émission, **caractérisé en ce que** chacune desdites N chaînes (201 à 204) d'émission est affectée d'un décalage temporel parmi une pluralité de N décalages temporels uniformément répartis sur un nombre n prédéterminé de périodes bit.

4. Procédé selon l'une quelconque des revendications 1 à 3, **caractérisé en ce que** chaque décalage temporel prédéterminé, spécifique à l'une desdites chaînes (201 à 204) d'émission, est une fraction prédéterminée d'une période bit.

5. Procédé selon l'une quelconque des revendications 1 à 4, **caractérisé en ce que** lesdits décalages temporels sont répartis de part et d'autre d'une référence temporelle propre à ladite station de base.

6. Procédé selon l'une quelconque des revendications 1 à 5, **caractérisé en ce que** ledit réseau d'antennes (261 à 268) appartient au groupe comprenant les réseaux d'antennes coplanaires et les réseaux d'antennes non coplanaires.

7. Procédé selon l'une quelconque des revendications 1 à 6, **caractérisé en ce que** ladite station de base est du type comprenant au moins deux réseaux d'antennes couvrant chacun un secteur angulaire distinct.

8. Procédé selon la revendication 7, chaque réseau d'antennes étant du type coplanaire, **caractérisé en ce que** les antennes (261 à 268) de chaque réseau sont équiespacées d'une distance inférieure à la demi-longueur d'onde de la fréquence maximale utilisée dans le secteur angulaire couvert par ledit réseau.

9. Procédé selon l'une quelconque des revendications 1 à 8, **caractérisé en ce que** ledit réseau d'antennes (2G1 à 268) est également utilisé pour transmettre au moins un signal de trafic, selon une technique de superposition et/ou d'addition de signaux sur au moins certaine(s) chaîne(s) (201 à 204) d'émission.

10. Procédé selon l'une quelconque des revendications 1 à 9, **caractérisé en ce que** ledit système de radiocommunication numérique cellulaire appartient au groupe comprenant les systèmes à Accès Multiple à Répartition Spatiale et les systèmes à filtrage spatial.

11. Procédé selon l'une quelconque des revendications 1 à 10, **caractérisé en ce que** ledit signal de contrôle est un signal BCCH propre à ladite station de base.

12. Station de base d'un système de radiocommunication numérique cellulaire, ladite station de base comprenant au moins un réseau d'une pluralité d'antennes (261 à 268) permettant de créer dynamiquement un faisceau (31) d'émission d'un signal de contrôle, ledit faisceau (31) d'émission pouvant prendre différentes positions (33) angulaires comprises dans une plage (32) angulaire prédéterminée, une pluralité de chaînes (201 à 204) d'émission étant associées à ladite pluralité d'antennes (261 à 268), chaque chaîne(201 à 208) d'émission comprenant notamment des moyens (223) de modulation de phase et des moyens (222) de déphasage, chaque antenne (261 à 268) émettant un signal fourni par l'une desdites chaînes (201 à 208) d'émission, dite associée, à partir dudit signal de contrôle et contribuant à la création dudit faisceau (31),
**caractérisé en ce que** ladite station de base comprend des moyens (21) d'affectation audit signal de contrôle, dans au moins une desdites chaînes (201 à 204) d'émission, d'un décalage temporel spécifique prédéterminé, de façon que ledit faisceau (31) d'émission soit un faisceau (31) vibrant, prenant successivement au moins certaines desdites différentes positions (33) angulaires et permettant une diffusion isotropique dudit signal de contrôle dans ladite plage (32) angulaire.

**Claims**

1. A method of transmitting a control signal by a base station of a digital cellular mobile radio system, said base station comprising at least one array of a plurality of antennas (261 to 268) for dynamically creating a beam (31) transmitting said control signal, said transmit beam (31) being adapted to assume different angular positions (33) within a predetermined angular range (32), a plurality of transmit subsystems (201 to 208) being associated with said plurality of antennas (261 to 268), each transmit subsystem (201 to 208) including phase modulator means (221) and phase-shifter means (222), each antenna (261 to 268) transmitting a signal supplied by an associated one of said transmit subsystems (201 to 208) on the basis of said control signal and contributing to the creation of said beam (31), **characterized in that** said method includes the following step:

   allocating (11) to said control signal, in at least one of said transmit subsystems, a predetermined specific time shift so that said transmit beam (31) is a vibrating beam (31), assuming in succession at least some (33) of said different angular positions and enabling isotropic broadcasting of said control signal in said angular range (32).

2. A method according to claim 1, **characterized in that** the difference between two time shifts allocated to two transmit subsystems associated with two adjacent antennas (26) is equal to a basic time shift dT of predetermined fixed value.

3. A method according to claim 1 or claim 2, said beam (31) being created by N antennas (261 to 264) associated with N transmit subsystems (201 to 204), **characterized in that** each of said N transmit subsystems (201 to 204) is allocated one of a plurality of N time shifts uniformly distributed across a predetermined number $\underline{n}$ of bit periods.

4. A method according to any one of claims 1 to 3, **characterized in that** each predetermined time shift specific to one of said transmit subsystems (201 to 204) is a predetermined fraction of a bit period.

5. A method according to any one of claims 1 to 4, **characterized in that** said time shifts are distributed on both sides of a time reference specific to said base station.

6. A method according to any one of claims 1 to 5, **characterized in that** said antenna array (261 to 268) belongs to the group comprising coplanar antenna arrays and non-coplanar antenna arrays.

7. A method according to any one of claims 1 to 6, **characterized in that** said base station is of the type comprising at least two antenna arrays each covering a separate angular sector.

8. A method according to claim 7, each antenna array being of the coplanar type, **characterized in that** the antennas (261 to 268) of each array are equally spaced by a distance of less than half the wavelength at the maximum frequency used in the angular sector covered by said array.

9. A method according to any one of claims 1 to 8, **characterized in that** said antenna array (261 to 268) is also used to transmit at least one traffic signal using a signal superposition and/or addition technique in at least some transmit subsystems (201 to 204).

10. A method according to any one of claims 1 to 9, **characterized in that** said digital cellular mobile radio system belongs to the group comprising space-division multiple access systems and spatial filtering systems.

11. A method according to any one of claims 1 to 10, **characterized in that** said control signal is a BCCH signal specific to said base station.

12. Base station of a digital cellular mobile radio system, said base station comprising at least one array of a plurality of antennas (261 to 268) for dynamically creating a beam (31) transmitting said control signal, said transmit beam (31) being adapted to assume different angular positions (33) within a predetermined angular range (32), a plurality of transmit subsystems (201 to 208) being associated with said plurality of antennas (261 to 268), each transmit subsystem (201 to 208) including phase modulator means (223) and phase-shifter means (222), each antenna (261 to 268) transmitting a signal supplied by an associated one of said transmit subsystems (201 to 208) on the basis of said control signal and contributing to the creation of said beam (31),
**characterized in that** said base station includes means (21) for allocating to said control signal, in at least one of said transmit subsystems (201 to 204), a predetermined specific time shift so that said transmit beam (31) is a vibrating beam (31), assuming in succession at least some of said different angular positions (33) and enabling isotropic broadcasting of said control signal in said angular range (32).

**Patentansprüche**

1. Verfahren zur Übertragung eines Steuersignals durch eine Basisstation eines digitalen, zellularen Funkkommunikationssystems, wobei die genannte Basisstation mindestens ein Netzwerk aus einer Vielzahl von Antennen (261 bis 268) umfasst, die die dynamische Erzeugung eines Senderichtstrahls (31) aus dem genannten Steuersignal ermöglichen, wobei der genannte Senderichtstrahl (31) verschiedene Winkelpositionen (33) innerhalb eines vordefinierten Winkelbereichs (32) einnehmen kann, wobei der genannten Vielzahl an Antennen (261 bis 268) eine Vielzahl von Übertragungsketten (201 bis 208) zugeordnet sind, wobei jede Übertragungskette (201 bis 208) insbesondere Vorrichtungen (221) zur Phasenmodulation und Vorrichtungen (222) zur Phasenverschiebung umfasst, wobei jede Antenne (261 bis 268) ein Signal überträgt, das von einer der genannten, zugeordneten Übertragungsketten (201 bis 268) geliefert wird, das von dem genannten Steuersignal ausgeht und zur Erzeugung des genannten Richtstrahls (31) beiträgt,
**dadurch gekennzeichnet, dass** das genannte Verfahren den folgenden Schritt umfasst:

   - Zuweisung (11) einer spezifischen, vordefinierten zeitlichen Verschiebung für das genannte Steuersignal in mindestens einer der genannten Übertragungsketten, so dass es sich bei dem genannten Senderichtstrahl (31) um einen Schwingungsstahl (31) handelt, der nacheinander mindestens einige (33) der genannten verschiedenen Winkelpositionen einnimmt und eine isotropische Übertragung des genannten Steuersignals innerhalb des genannten Winkelbereichs (32) ermöglicht.

2. Verfahren gemäß Anspruch 1, **dadurch gekennzeichnet, dass** die Differenz zwischen zwei zeitlichen Verschiebungen, die zwei Übertragungsketten zugewiesen werden, die zwei benachbarten Antennen (26) zugeordnet sind, gleich einer elementaren zeitlichen Verschiebung dT mit einem vordefinierten, festen Wert beträgt.

3. Verfahren gemäß einem der Ansprüche 1 und 2, wobei der genannte Richtstrahl (31) von N Antennen (261 bis 264) erzeugt wird, die N Übertragungsketten (201 bis 204) zugeordnet sind, **dadurch gekennzeichnet, dass** jeder der genannten N Übertragungsketten (201 bis 204) eine zeitliche Verschiebung aus einer Vielzahl von N zeitlichen Verschiebungen zugeordnet ist, die über eine vordefinierte Anzahl n an Bittakten verteilt sind.

4. Verfahren gemäß einem der Ansprüche 1 bis 3, **dadurch gekennzeichnet, dass** es sich bei jeder vordefinierten zeitlichen Verschiebung, die für jede der genannten Übertragungsketten (201 bis 204) spezifisch ist, um einen vordefinierten Bruchteil eines Bittakts handelt.

5. Verfahren gemäß einem der Ansprüche 1 bis 4, **dadurch gekennzeichnet, dass** die genannten zeitlichen Verschiebungen um eine Zeitreferenz herum verteilt sind, die für die genannte Basisstation spezifisch ist.

6. Verfahren gemäß einem der Ansprüche 1 bis 5, **dadurch gekennzeichnet, dass** das genannte Antennennetzwerk (261 bis 268) zu einer Gruppe gehört, die koplanare Antennennetzwerke und nicht koplanare Antennennetzwerke umfasst.

7. Verfahren gemäß einem der Ansprüche 1 bis 6, **dadurch gekennzeichnet, dass** die genannte Basisstation eine Bauart aufweist, die mindestens zwei Antennenrietzwerke umfasst, die jeweils einen unterschiedlichen Winkelsektor abdecken.

8. Verfahren gemäß Anspruch 7, wobei jedes Antennennetzwerk koplanaren Typs ist, **dadurch gekennzeichnet, dass** die Antennen (261 bis 268) jedes Netzwerks in einem gleichmäßigen Abstand zueinander angeordnet sind, der unter der halben Wellenlänge der maximalen Frequenz liegt, die in dem von dem genannten Netzwerk abgedeckten Winkelsektor eingesetzt wird.

9. Verfahren gemäß einem der Ansprüche 1 bis 8, **dadurch gekennzeichnet, dass** das genannte Antennennetzwerk (261 bis 268) außerdem genutzt wird, um mindestens ein Verkehrsdatensignal entsprechend einer Technik der Signalüberlagerung und/oder addition, zumindest über einen oder mehrere bestimmte Übertragungsketten (201 bis 204) zu übertragen.

10. Verfahren gemäß einem der Ansprüche 1 bis 9, **dadurch gekennzeichnet, dass** das genannte digitale, zellulare Funkkommunikationsnetz zu einer Gruppe gehört, die Systeme mit Mehrfachzugriff mit räumlicher Aufteilung und Systeme mit Raumfilterung umfasst.

11. Verfahren gemäß einem der Ansprüche 1 bis 10, **dadurch gekennzeichnet, dass** es sich bei dem genannten Steuersignal um ein für die genannte Basisstation spezifisches BCCH-Signal handelt.

12. Basisstation eines digitalen, zellularen Funkkommunikationsnetzes, wobei die genannte Basisstation mindestens ein Netzwerk aus einer Vielzahl von Antennen (261 bis 268) umfasst, die die Möglichkeit zur dynamischen Erzeugung eines Senderichtstrahls (31) für ein Steuersignal bieten, wobei der genannte Senderichtstrahl (31) verschiedene Winkelpositionen (33) innerhalb eines vordefinierten Winkelbereichs (32) einnehmen kann, wobei der genannten Vielzahl von Antennen (261 bis 268) eine Vielzahl von Übertragungsketten (201 bis 204) zugeordnet sind, wobei jede Übertragungskette (201 bis 208) insbesondere Vorrichtungen (223) zur Phasenmodulation und Vorrichtungen (222) zur Phasenverschiebung umfasst, wobei jede Antenne (261 bis 268) ein Signal überträgt, das von den genannten, zugeordneten Übertragungsketten (201 bis 208) geliefert wird, das von dem Steuersignal ausgeht und zur Erzeugung des genannten Richtstrahls (31) beiträgt,
**dadurch gekennzeichnet, dass** die genannte Basisstation Vorrichtungen (21) zur Zuweisung einer spezifischen, vordefinierten zeitlichen Verschiebung für das genannte Steuersignal in mindestens einer der genannten Übertragungsketten (201 bis 204) umfasst, so dass es sich bei dem genannten Senderichtstrahl (31) um einen Schwingungsstrahl (31) handelt, der nacheinander mindestens einige der genannten unterschiedlichen Winkelpositionen (33) einnimmt und eine isotropische Übertragung des genannten Steuersignals innerhalb des genannten Winkelbereichs (32) ermöglicht.

AFFECTATION D'UN DECALAGE TEMPOREL — 11

MODULATION DE PHASE MULTIPORTEUSE — 121

MODULATION D'AMPLITUDE MULTIPORTEUSE — 122

— 12

DEPHASAGE — 123

SOMMATION DES CONTRIBUTIONS — 124

CONVERSION NUMERIQUE/ANALOGIQUE — 13

MELANGE D'EMISSION — 14

AMPLIFICATION — 15

EMISSION — 16

Fig. 1

$\Delta T_1 = 0 * \Delta T$

$\Delta T_2 = 1 * \Delta T$

$\Delta T_3 = 2 * \Delta T$

$\Delta T_4 = 3 * \Delta T$

Fig. 2a

Fig. 2b

DEFINITION D'ENSEMBLE(S) D'ANTENNES — 41

ASSOCIATION D'UN ENSEMBLE DE CHAINES — 42

AFFECTATION A CHAQUE ENSEMBLE DE CHAINES — 43

MODULATION DE PHASE MULTIPORTEUSE — 121

MODULATION D'AMPLITUDE MULTIPORTEUSE — 122

— 12

DEPHASAGE — 123

SOMMATION DES CONTRIBUTIONS — 124

CONVERSION NUMERIQUE/ANALOGIQUE — 13

MELANGE D'EMISSION — 14

AMPLIFICATION — 15

EMISSION — 16

## Fig. 4

Fig. 5

DEFINITION D'ENSEMBLE(S) D'ANTENNES —— 41

ASSOCIATION D'UN ENSEMBLE DE CHAINES —— 42

AFFECTATION A CHAQUE ENSEMBLE DE CHAINES —— 43

—— 70

MODULATION DE PHASE MULTIPORTEUSE —— 121

MODULATION D'AMPLITUDE MULTIPORTEUSE —— 122

—— 12

DEPHASAGE —— 123

SOMMATION DES CONTRIBUTIONS —— 124

AFFECTATION D'UN DECALAGE TEMPOREL —— 11

CONVERSION NUMERIQUE/ANALOGIQUE —— 13

MELANGE D'EMISSION —— 14

AMPLIFICATION —— 15

EMISSION —— 16

Fig. 7

Fig. 8

Fig. 3

Fig. 6

Fig. 9